# EUROPEAN PATENT SPECIFICATION

(11) **EP 1 181 697 B1**
(45) Date of publication and mention of the grant of the patent: **26.04.2006**
(21) Application number: 00920431.4
(22) Date of filing: 08.03.2000
(51) Int. Cl.: H01F 5/00, H01F 7/06, H02H 3/00

(54) **AN ELECTRICAL COIL MODULE, AN ELECTRICAL COIL COMPRISING SUCH MODULES, AN ACTUATION MECHANISM INCLUDING SUCH A COIL AND A CIRCUIT BREAKER COMPRISING SUCH AN ACTUATION MECHANISM**
MODUL FÜR EINE ELEKTRISCHE SPULE, ELEKTRISCHE SPULE MIT DIESEN MODULEN, ANTRIEBSMECHANISMUS MIT DIESER SPULE, UND SCHUTZSCHALTER MIT DIESEM ANTRIEBSMECHANISMUS
MODULE DE BOBINE ELECTRIQUE, BOBINE ELECTRIQUE COMPRENANT DE TELS MODULES, MECANISME D'ACTIONNEMENT COMPRENANT UN TELLE BOBINE ET DISJONCTEUR COMPRENANT LEDIT MECANISME D'ACTIONNEMENT

(30) Priority: 08.03.1999 SE 9900852
(43) Date of publication of application: 27.02.2002
(73) Proprietor: Sécheron SA, 1242 Satigny (CH); Laboratoire d'Electronique Industrielle, 1015 Lausanne (CH)
(72) Inventor: MEYER, Jean-Marc, CH-1008 Prilly (CH); DUFFOUR, Henri, FR-74500 Feternes (FR); MARTIN, Serge, CH-1217 Meyrin (CH)
(74) Representative: Mayjonade, Bernard
(86) International application number: PCT/EP2000/000789
(87) International publication number: WO 2000/054292

(56) References cited:
- EP-A- 0 371 157
- EP-A- 0 661 722
- EP-A- 0 771 012
- FR-A- 1 400 674
- GB-A- 2 163 603
- US-A- 5 319 342
- US-A- 5 726 615
- PATENT ABSTRACTS OF JAPAN vol. 018, no. 573 (E-1624), 2 November 1994 (1994-11-02) & JP 06 215951 A (YOKOGAWA ELECTRIC CORP), 5 August 1994 (1994-08-05)

## Description

### Technical field

This invention relates to an arrangement of planar electrical coil modules, an electrical coil comprising such modules, an actuation mechanism including such a coil and a circuit breaker comprising such an actuation mechanism. The present actuation mechanism is preferably used in circuit breakers especially for protection of DC installations such as traction networks including the rail vehicles. The circuit breaker is typically used for limiting current in case of short circuit somewhere in the installation. It has, however, also numerous other industrial applications.

A hybrid breaker stands for a circuit breaker making use of the successive action of a very fast mechanical system and a static circuit breaker.

### Background art

It is possible to distinguish three different categories of circuit breakers for DC.

The electromechanical circuit breaker, the static circuit breaker and the hybrid circuit breaker.

The first type of circuit breaker, the electromechanical circuit breaker, is today used in most of the feeding stations and rail vehicles in traction systems.

This type has, however, several inconveniences such as high wear, high noise level, a relatively long reaction time, high maintenance costs, etc..

The static circuit breaker has been the object of numerous tests, studies and realisations on a laboratory scale but the high dissipation during normal operation makes it unusable for commercial exploitation.

The last type of circuit breaker, the hybrid breaker, has its name from the combination of an electromechanical system and power electronics. During normal working conditions the current is conducted through a mechanical connector having very low losses. When activated the mechanical connector disconnects and the current is taken over by a static breaker connected in parallel. Once the mechanical connector has completely disconnected the static part is breaking the current through the circuit. Due to the fast operation of the mechanical system and the commutation of the current the arc created over the mechanical contacts is limited.

Several different realisations are possible. One known solution uses the injection of current in the opposite direction of the short circuit current by means of the discharge of a capacitor. This type has been the object of numerous tests and realisations. Its complexity, price and lack of reliability have, however, prevented its commercial success.

An essential feature of a circuit breaker e.g. a hybrid circuit breaker is the speed of the electromechanical system. One aspect of the present invention concerns a novel arrangement of a modular planar electrical coil manufactured on generally flat substrates clamped together in a stack.

It is known from e.g. the document US-A-5726615 to superimpose modules of this type in order to form an electrical coil.

### Brief description of the invention

One object of the present invention is to provide an improved arrangement of planar electrical coil modules of planar type preferably manufactured by means of printed circuit techniques on a generally flat substrate.

It is a further object of the invention to provide an extremely thin and compact electrical coil making use of such an arrangement of coil modules which is especially advantageous as a driving means in a so called Thomson mechanism forming part of a circuit breaker. This type of coil has also other applications.

A further object of the present invention is to provide a circuit breaker of the hybrid type which is extremely fast and efficient.

An advantageous embodiment of the circuit breaker is characterised by a new design of the electromechanical actuation mechanism and an especially compact and symmetrical design of the static part of the breaker.

An important advantage with the circuit breaker according to the invention is that the dissipation is extremely low. The noise level when actuated is also very low. The new design of the actuation mechanism for the mechanical contact has increased the speed of the mechanism and made it very compact. Reliability and life time of the breaker are excellent.

The above and further objects are realised by means of the present invention which is characterised according to the appended claims.

### Brief description of the figures

Other objects, uses and advantages of this invention will be apparent from the reading of this description which proceeds with reference to the accompanying drawings forming part thereof and wherein:
figure 1 schematically shows a hybrid circuit breaker according to the present invention,
figure 2 schematically shows the electromechanical part of the circuit breaker,
figure 3a and 3b show different views of a coil module of planar type forming part of a coil in the drive mechanism of the electromechanical part of the circuit breaker,
figure 3c shows an isolating element to be placed between two successive coil modules according to figures 3a and 3b, such arrangement does, however, not form part of the present invention,
figure 4a - 4d show different views of two coil modules of planar type forming part of an embodiment of the coil in the drive mechanism of the electromechanical part of the circuit breaker,
figure 5 shows the electrical and mechanical arrangement of the components of the static part of the circuit breaker,
figure 6 shows another electrical and mechanical arrangement of the components of the static part of the circuit breaker,
figure 7 shows a MOV - resistor combination efficient to reduce the cost of the MOV by distributing the energy.
figure 8 schematically shows the locking mechanism of the electromechanical part of the circuit breaker,
figure 9a and 9b show side views of the contact and drive mechanism of one embodiment of the invention.

### Detailed description of the invention

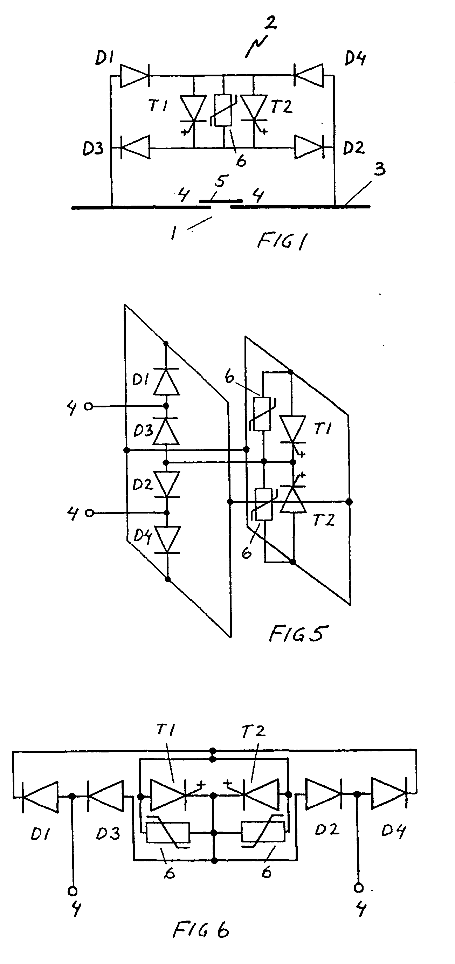

Figure 1 shows schematically and in a general way a circuit breaker according to the present invention. A normally closed mechanical contact 1 in the main circuit 3 is carrying the current during normal conditions. The contact 1 comprises fixed contact elements 4 and a mobile contact element 5. A static circuit breaker, generally designated 2 is connected in parallel to the contact 1. The current through the mechanical contact could flow in either direction at the moment when the circuit breaker is activated. The static part is therefore symmetrical to be able to take over and break the current in case of e.g. a short circuit in the main circuit 3.

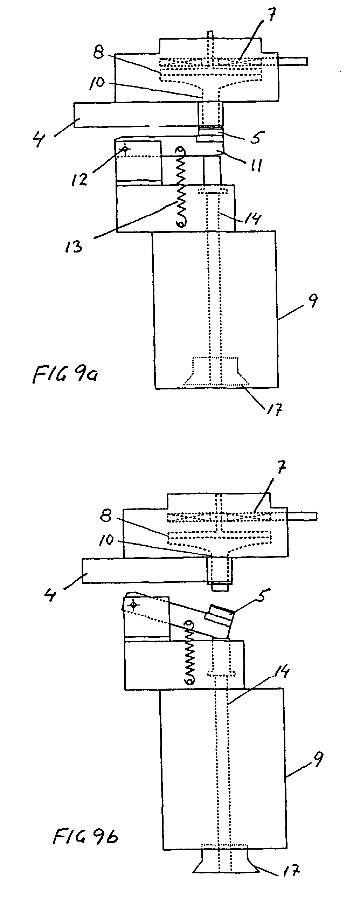

The static part 2 of the circuit breaker comprises a diode bridge D1-D4 making the breaker work for both directions of the current in the main circuit 3. The active part of the breaker comprises at least one thyristor of the type IGCT (Integrated Gate Commutated Thyristor). The described embodiment uses two IGCTs T1, T2 connected in parallel between which the current is partitioned. This design and its components make it possible to break currents of the order of 6kA without the necessity of special precautions like help circuits for the commutation, static and dynamic balancing of the currents, matching the component etc.. This value of the current is of course not to be interpreted as a limitation in any direction. By means of an appropriate choice of the components circuit breakers for higher as well as lower nominal current values can of course be designed according to the same principles. A MOV (Metal Oxide Varistor) 6 connected in parallel to the IGCTs is used to limit the voltage over the devices when the IGCTs are opening and to dissipate the inductive energy of the main circuit 3. Alternatively the MOV 6 connected in parallel with the IGCTs can be combined with an additional parallel branch including a second MOV 6' having a resistor 25 in series in order to reduce the energy dissipated in the MOV 6. This arrangement is shown in figure 7. The MOV 6' must have a withstand-voltage value close to the feeder voltage.

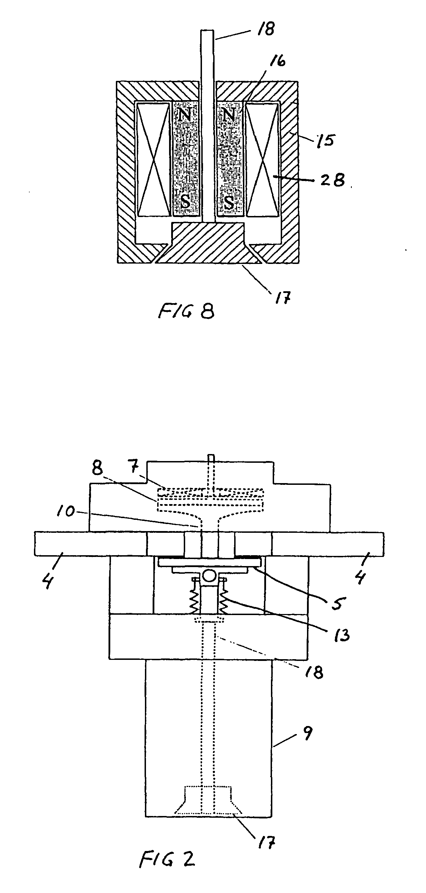

In reality the mechanical contact 1 is controlled by means of a very fast actuating mechanism e.g. of the Thomson type. Figure 2 shows such a mechanism and the contact 1. The mechanism uses electrodynamic repulsion between two electrical currents circulating in the opposite directions in a coil 7 and a disk 8 to create the needed physical movement. Under normal conducting conditions the contact 1 is secured by means of magnetic means 9. The mechanism also includes damping means for the mechanical movement (not shown) preferably arranged below the magnetic means 9. The mechanism will be further described below.

During normal operation the mechanical contact 1 is closed and the current in the main circuit 3 passes the contact without creating any excessive thermal effect.

A short circuit somewhere in the main circuit 3 could considerably increase the current over nominal values which could of course damage components and equipment in the circuit. In order to minimise the effect of such a short circuit it would therefore be of interest to completely break the current as quickly as possible.

Detection means (not shown) are arranged in the circuit to detect an increase of the current which could be due to e.g. a short circuit. Co-operating control means (not shown) sends a signal to the actuation means of the mechanical breaker. A signal is also sent to the gates of the thyristors T1, T2 to activate the same. If the contact element 5 at the breaking instant is opening symmetrically, i.e. if the element is creating two spark gaps at the same time, one at each end portion of the element 5, two sparks appear between the mobile contact element 5 and the fixed contact elements 4. The voltages related to these sparks which could be in the order of 2x20V allows the current to commutate to the static part 2 of the breaker relatively fast (in the order of 50 microseconds). The air in the two gaps is ionised due to the arcs which means that the dielectric properties of the gaps are deteriorating. As a consequence it will be necessary to wait until the air has de-ionised and cooled down before the IGCTs are turned off otherwise there is a risk that the high voltage (e.g. 3kV) will generate new arcs across the contact elements.

In the alternative the element 5 could be given a movement such that it opens unsymmetrically, i.e. to start with only one spark gap is created at the breaking instant. Thus only one spark appears at one end portion of the element 5. The current will in this case commutate slower (e.g. 100 microseconds). The advantage with this alternative is that the air will not be ionised at the end portion of the contact element 5 where no spark is created during the commutation and the overall dielectric properties will be much better which means that the delay before the IGCTs are turned off could be made much shorter. The energy dissipated in the volume of air between the contact elements 4, 5 is very low due to the fact that the current rapidly decreases. The high speed of the separation of the contact elements also favours the replacement of air in said volume which contributes to a good cooling. Additionally the evaporation of metal from the contact elements is negligible compared to the case with an electromechanical breaker.

The speed of the commutation is mainly dependent on the geometry of the connections of the static cell and the voltage over the conducting semiconductors.

The parallel connection of the two IGCTs T1, T2 requires a perfect symmetry in the geometry of the bus bars which leads to symmetrical stray inductances. The diodes D1, D2, D3, D4 and the IGCTs T1, T2 need a mounting which exercises mechanical pressure P1 and P2 on the components. If the pressure needed for the diodes P1 is different than that for the IGCTs, P2, the mechanical assembly can be arranged as represented in figure 5 with two separate stacks of components. If the same pressure P3 is required, the arrangement of figure 6 with one single stack can be adopted. In both figure 5 and figure 6, the current paths (and so the stray inductances) are exactly the same for the two IGCTs connected in parallel.

When the current has completely commutated to the semiconductors the breaker has to wait until the contacts are sufficiently separated before the static interruption is started. It is necessary that the isolation distance between the mechanical contact elements is sufficient to guarantee that no arcing reappears.

The interruption of the current in the respective IGCT is almost instantaneous. The current is thus passing the MOV 6 and decreases rapidly. The time between the detection of a short circuit and the start of the decrease of the current is about 350 microseconds which is about 15 to 20 times as fast as for electromechanical breakers. The power semiconductors are typically capable of interrupting several thousands of amperes in a time less than two microseconds. Taking this into account it is clear that in order to profit from this characteristic it is necessary to reduce the opening time for the mobile contact.

In order to reduce the opening time for the contact 1 a system with electrodynamic propulsion is used as described above. The mechanical part of the hybrid breaker comprises three distinct units, the mobile contact 5, the magnetic locking mechanism 9 and the actuator 7, 8, 10. The actuator giving the electrodynamic propulsion is in the described example of the previously known Thomson type.

Such an actuator is illustrated schematically in figures 2 and 9. The mobile contact 5 has in the illustrated embodiment of the invention been given a pivoting movement in order to reduce the displaced mass in the operation.

An arrangement of the moving contact for pivoting movement is shown in figure 9. The moving contact 5 has been mounted on an arm 11 pivoting around a pin 12. The arm is preferably spring loaded by means springs 13 keeping the arm in contact with the end portion of the shaft 14 of the locking mechanism 9.

In order to evacuate the heat produced at the contact elements 4, 5 the mass of the fixed contact elements 4 have deliberately been chosen important. The magnetic locking mechanism 9 which is illustrated more in detail in figure 8 allows the closing and opening of the circuit breaker and the application of a constant force between the contact elements in the closed position in order to decrease the electrical resistance. The locking mechanism comprises an electromagnet 15 with a mobile iron core and a permanent magnet 16. The locking mechanism is closed by injecting a current in the coil 28 from an auxiliary DC source. This creates a magnetic flux in the iron circuit. The flux generates a moving force that makes the iron core 17 move towards the permanent magnet 16. The flux also magnetises the permanent magnet, allowing a permanent force that maintains the core in the closed position.

The mobile core 17 of the magnetic locking mechanism has been designed as light as possible in order to decrease the total mass. A shaft 18 transmits the resulting movement to the mobile contact 5.

The opening of the electrical contact 4, 5 can be achieved in two different ways. in an emergency case, e.g. at a short circuit, the contact can be opened by means of the actuator, e.g. of the Thomson type, as described below. In this case the forces generated by the actuator will release the locking mechanism 9 despite the fact that this mechanism is still magnetised. The contact 4, 5 can also be deliberately opened by demagnetising the locking mechanism.

The springs 13 shown in figures 2, 9a and 9b are keeping the contact in the open position after an opening by means of the actuator. As mentioned above the locking mechanism has not been demagnetised in that case and e.g. a mechanical shock could under circumstances re-close the contact. In the closed position the force generated by the magnet is much stronger than the force from the spring.

A damping arrangement (not shown) decelerates the moving masses after the opening of the contact. In this particular case a special plastic foam material positioned below the locking mechanism has been used which gives excellent absorption characteristics but of course many other types of chock absorbing arrangements could be envisaged alone or in combination, for example pneumatic or hydraulic types of damping.

The Thomson type actuator comprises a coil 7 in which is circulated a very strong current in pulse form (in one embodiment of the invention a current in the order of 15 kA, top value has been used). This current could for instance be generated by means of a battery of electrolytic capacitors controlled by a diode-thyristor arrangement. A disk 8 of copper or similar is positioned just below the coil. By means of induction a counter current is generated in the disk when the coil is energised. The top value of this induced current could in the same embodiment reach a value of 80 kA. Due to these two currents a violent repulsion effect is created between the coil 7 and the mobile disk 8 which will move the disk and the mobile element 5 of the mechanical contact 1 actuated by the shaft 10 fixed to the disk 8.

In an especially advantageous embodiment of the invention a special type of coil is used. This coil comprises a number of superimposed coil modules 19 of planar type which could be manufactured by means of e.g. printed circuit techniques. These modules are superimposed to give the appropriate characteristics for the coil. One advantage with this type of design of the actuating coil of the Thomson mechanism is that the coil 7 can be made extremely thin in the direction perpendicular to the surface of the disk 8 which means that the two opposite currents in the coil and the disk are brought close together which considerably increases the repulsive effect between the coil 7 and the disk 8. This will of course decrease the reaction time of the mechanism.

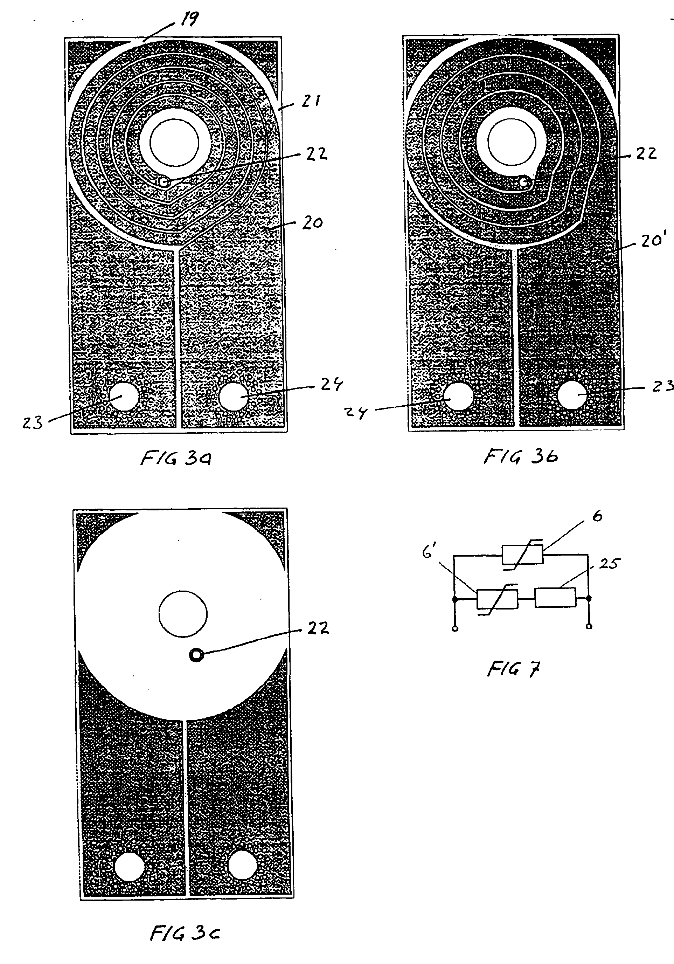

A basic module for such a coil is shown in figures 3a and 3b. By means of known techniques a first layout of conducting material 20, e.g. copper, is created on one side of a substrate 21. On the opposite side of the same substrate a second layout 20' is created. Figure 3a shows one side of the module and figure 3b the other side. The conductor on each side of the substrate is communicating to the conductor on the other side by means of an electrical connection through the substrate. Such an electrical connection could e.g. have the form of the metallized walls of a through hole 22. If thus e.g. the hole 23 is considered to be the input to the module the current will flow via the conducting material 20' to the hole 22 which conducts to the other side of the substrate. The current will then follow the conductor on the other side to the output 24. A number of such modules could be superimposed and clamped together to create a flat and very compact coil. In this embodiment successive modules have to be separated by means of an isolation element as illustrated in figure 3c. The holes 23, 24 and 22 can all three conduct current between the two sides of the substrate via the metallized wall in the respective hole.

It is evident that when stacking such modules and isolation elements the modules will be electrically connected in parallel. A suitable number of modules are put together to give the desired characteristic of the coil.

The skin effect which has to be considered in high frequency and pulse mode will create much less problems than in the case of an ordinary coil which means that the conductor section of the coil will be more efficiently used. In a particular embodiment the total copper section is divided in about ten very thin slices due to the planar design of the coil. In such a case, the total copper section will be carrying the current.

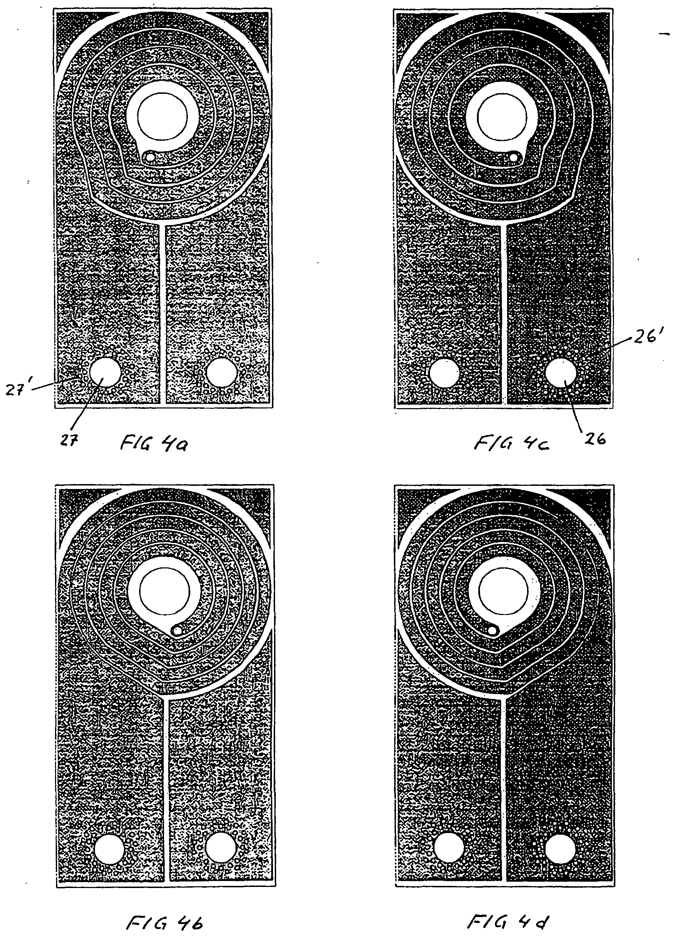

Figure 4a - 4d show different views of two coil modules of planar type forming part of an embodiment of a coil according to the invention which e.g. can be used in the drive mechanism of the electromechanical part of a circuit breaker. Figure 4a and 4b and figure 4c nd 4d show the opposite sides of two coil modules respectively. Thus, if we define figure 4a as the upper side of the first type of module then figure 4b is the lower side of the same module. Then figure 4d will be the upper side and figure 4c the lower side of the second type of module. The layout of the lower side of the first type of module, figure 4b, and the upper side of the second type of module, figure 4d, are mirrored versions of each other as can be seen. The same goes for the layout of the upper side of the first type of module, figure 4a, and the lower side of the second type of module, figure 4c. The advantage of this arrangement is that if you alternate the types of modules when the coil is put together there does not have to be any isolation in between the coil modules. Short circuit of the coil windings is impossible. Thus, for given electrical characteristics the coil can be made even thinner by means of this second embodiment of the invention.

In an area around the input and output terminals 26 and 27 respectively of a coil module a number of smaller through holes 26' and 27' respectively have been arranged. The metallized walls of these holes are contributing to the conductive section between the two sides of the module.

## Claims

1. A pair of a first and a second electrical coil modules of planar type manufactured on a generally flat substrate (21)preferably by means of printed circuit techniques, each of said first and second modules having a first layout (20) of conducting material in spiral form constituting a first electrical conductor having an input terminal (26) arranged on one side of said substrate (21), and a second layout (20') in spiral form of conducting material constituting a second electrical conductor having an output terminal (27) arranged on the opposite side of said substrate, and said first and second conductors of each said modules being connected by means an electrical connection (22) through the substrate (21), so that an electrical voltage connected between the input and output terminals (26, 27) of a coil module will drive a current from one terminal (26) through the first electrical conductor on one side of the substrate via connection (22) through the substrate and the second electrical conductor on the other side of the substrate to the other terminal (27), **characterised in that** the first layout (20) of conducting material on said first electrical coil module constitutes a mirrored version of the first layout (20) of conducting material on said second electrical coil module, the second layout (20') of conducting material on said first electrical coil module constitutes a mirrored version of the second layout (20') of conducting material on said second electrical coil module.

2. An electrical coil comprising at least two coil modules according to claim 1 **characterised in that**, said modules are superimposed and clamped together with mirrored layouts towards each other without an intermediate isolation element.

3. An actuation mechanism of the Thompson type comprising an energising coil (7), a co-operating disk (8) and a shaft (10) transferring the movement of the disk (8) **characterised in that** said coil is of the type defined in claim 2.

4. An electromechanical circuit breaker comprising an actuation mechanism of the Thompson type, a pair of fixed contact elements (4) and a moving contact element (5) **characterised in that** said actuation mechanism is of the type defined in claim 3.

5. An electromechanical circuit breaker according to claim 4 **characterised in that** said moving contact element (5) is arranged on a pivoting arm (11).

6. A hybrid circuit breaker comprising an electromechanical circuit breaker according to claim 4 or 5 and a static circuit breaker connected in parallel **characterised in that** said static circuit breaker comprises a diode bridge (D1-D4) connected in parallel over the mechanical contacts (4, 5) of the electromechanical circuit breaker the diagonal of which bridge is including at least one IGCT type thyristor (T1, T2) connected in parallel with a metal oxide varistor (6).

7. A hybrid circuit breaker according to claim 6, **characterised in that** a second metal oxide varistor (6') in series with a resistor (25) is connected in parallel with said metal oxide varistor (6).

## Patentansprüche

1. Ein Paar aus einem ersten und einem zweiten elektrischen Spulenmodul des planaren Typs, bevorzugt mit Mitteln der Technologie gedruckter Schaltungen auf einem allgemein flachen Substrat (21) gefertigt, wobei der erste und zweite Modul je eine erste spiralförmige Anordnung (20) von leitendem Material, das einen ersten elektrischen Leiter darstellt, der einen Eingangsanschluss (26) auf der einen Seite des Substrats (21) aufweist, sowie eine zweite spiralförmige Anordnung (20') von leitendem Material besitzt, das einen zweiten elektrischen Leiter darstellt, der einen Ausgangsanschluss (27) auf der entgegengesetzten Seite des Substrats aufweist, der erste und zweite Leiter jedes der Moduln über eine elektrische Verbindung (22) durch das Substrat (21) hindurch so verbunden sind, dass eine zwischen dem Eingangs- und Ausgangsanschluss (26, 27) eines Spulenmoduls angelegte elektrische Spannung einen Strom von dem einen Anschluss (26) durch den ersten elektrischen Leiter auf der einen Seite des Substrats über die Verbindung (22) durch das Substrat hindurch und durch den zweiten elektrischen Leiter auf der anderen Seite des Substrats zum anderen Anschluss (27) treibt, **dadurch gekennzeichnet, dass** die erste Anordnung (20) von leitendem Material auf dem ersten elektrischen Spulenmodul eine spiegelbildliche Version der ersten Anordnung (20) von leitendem Material auf dem zweiten elektrischen Spulenmodul darstellt, während die zweite Anordnung (20') von leitendem Material auf dem ersten elektrischen Spulenmodul eine spiegelbildliche Version der zweiten Anordnung (20') von leitendem Material auf dem zweiten elektrischen Spulenmodul darstellt.

2. Elektrische Spule mit zumindest zwei Spulenmoduln nach Anspruch 1, **dadurch gekennzeichnet, dass** die Moduln mit den spiegelbildlichen Anordnungen zueinander ohne ein dazwischengelegtes isolierendes Element aufeinandergelegt und zusammengeklammert werden.

3. Betätigungsmechanismus vom Thompson-Typ mit einer Erregerspule (7), einer mitwirkenden Scheibe (8) und einer Welle (10), die die Bewegung der Scheibe (8) überträgt, **dadurch gekennzeichnet, dass** die Spule von dem in Anspruch 2 definierten Typ ist.

4. Elektromechanischer Schutzschalter mit einem Betätigungsmechanismus vom Thompson-Typ, einem Paar fester Kontaktelemente (4) und einem beweglichen Kontaktelement (5), **dadurch gekennzeichnet, dass** der Betätigungsmechanismus von dem in Anspruch 3 definierten Typ ist.

5. Elektromechanischer Schutzschalter nach Anspruch 4, **dadurch gekennzeichnet, dass** das bewegliche Kontaktelement (5) auf einem Schwenkarm (11) angeordnet ist.

6. Hybridschutzschalter mit einem elektromechanischen Schutzschalter nach Anspruch 4 oder 5 und einem parallel geschalteten statischen Schalter, **dadurch gekennzeichnet, dass** der statische Schalter eine Diodenbrücke (D1 bis D4) umfasst, die parallel zu den mechanischen Kontakten (4, 5) des elektromechanischen Schutzschalters geschaltet ist und deren Diagonale zumindest einen Thyristor des IGCT-Typs (T1, T2) enthält, der parallel zu einem Metalloxid-Varistor (6) geschaltet ist.

7. Hybridschutzschalter nach Anspruch 6, **dadurch gekennzeichnet, dass** ein zweiter Metalloxid-Varistor (6') in Reihenschaltung mit einem Widerstand (25) parallel zu dem benannten Metalloxid-Varistor (6) geschaltet ist.

## Revendications

1. Paire de premier et second modules de bobine électrique de type plan fabriqués sur un substrat généralement plat (21) de préférence au moyen de techniques de circuit imprimé, chacun desdits premier et second modules ayant une première disposition (20) de matériau conducteur en forme de spirale constituant un premier conducteur électrique ayant une borne d'entrée (26) agencée sur un premier côté dudit substrat (21), et une seconde disposition (20') en forme de spirale de matériau conducteur constituant un second conducteur électrique ayant une borne de sortie (27) agencée sur le côté opposé dudit substrat, et lesdits premier et second conducteurs de chacun desdits modules étant connectés par l'intermédiaire d'une connexion électrique (22) à travers le substrat (21), de sorte qu'une tension électrique connectée entre les bornes d'entrée et de sortie (26, 27) d'un module de bobine va entraîner un courant à partir d'une première borne (26) à travers le premier conducteur électrique sur un premier côté du substrat via une connexion (22) à travers le substrat et le second conducteur électrique sur l'autre côté du substrat jusqu'à la borne (27), **caractérisée en ce que** la première disposition (20) de matériau conducteur sur ledit premier module de bobine électrique constitue une version en image miroir de la première disposition (20) de matériau conducteur sur ledit second module de bobine électrique, la seconde disposition (20') de matériau conducteur sur ledit premier module de bobine électrique constitue une version en image miroir de la seconde disposition (20') de matériau conducteur sur ledit second module de bobine électrique.

2. Bobine électrique comportant au moins deux modules de bobine selon la revendication 1, **caractérisée en ce que** lesdits modules sont superposés et immobilisés ensemble avec des dispositions en image miroir l'un vers l'autre sans élément isolant intermédiaire.

3. Mécanisme d'actionnement du type Thompson comportant une bobine d'excitation (7), un disque coopérant (8) et un arbre (10) transférant le déplacement du disque (8), **caractérisé en ce que** ladite bobine est du type défini dans la revendication 2.

4. Coupe-circuit électromécanique comportant un mécanisme d'actionnement du type Thompson, une paire d'éléments de contact fixes (4), et un élément de contact mobile (5), **caractérisé en ce que** ledit mécanisme d'actionnement est du type défini dans la revendication 3.

5. Coupe-circuit électromécanique selon la revendication 4, **caractérisé en ce que** ledit élément de contact mobile (5) est agencé sur un bras pivotant (11).

6. Coupe-circuit hybride comportant un coupe-circuit électromécanique selon la revendication 4 ou 5, et un coupe-circuit statique connecté en parallèle, **caractérisé en ce que** ledit coupe circuit statique comporte un pont de diodes (D1 à D4) connecté en parallèle aux contacts mécaniques (4, 5) du coupe-circuit électromécanique, la diagonale du pont comportant au moins un thyristor de type IGCT (T1, T2) connecté en parallèle à une varistance à oxyde métallique (6).

7. Coupe-circuit hybride selon la revendication 6, **caractérisé en ce qu'**une seconde varistance à oxyde métallique (6') en série avec une résistance (25) est connectée en parallèle à ladite varistance à oxyde métallique (6).
